# EUROPEAN PATENT SPECIFICATION

(11) **EP 2 052 923 B1**
(45) Date of publication and mention of the grant of the patent: **16.05.2012**
(21) Application number: 07792901.6
(22) Date of filing: 16.08.2007
(51) Int. Cl.: B60R 22/48

(54) **BUCKLE, SEATBELT REMINDER DEVICE USING THE BUCKLE, AND SEATBELT DEVICE USING THE SEATBELT REMINDER DEVICE**
SCHNALLE, DIE SCHNALLE VERWENDENDE SITZGURTWARNVORRICHTUNG UND DIE SITZGURTWARNVORRICHTUNG VERWENDENDE SITZGURTVORRICHTUNG
BOUCLE, DISPOSITIF DE RAPPEL DE LA CEINTURE DE SECURITE UTILISANT LA BOUCLE, ET DISPOSITIF DE CEINTURE DE SECURITE UTILISANT LE DISPOSITIF DE RAPPEL DE LA CEINTURE DE SECURITE

(30) Priority: 21.08.2006 JP 2006224348
(43) Date of publication of application: 29.04.2009
(73) Proprietor: Takata Corporation, Tokyo 106-8510 (JP)
(72) Inventor: AOKI, Hiroshi, Minato-ku Tokyo 106-8510 (JP); OHASHI, Ro, Minato-ku Tokyo 106-8510 (JP)
(74) Representative: Banzer, Hans-Jörg
(86) International application number: PCT/JP2007/066317
(87) International publication number: WO 2008/023749

(56) References cited:
- DE-A1- 2 553 186
- DE-A1- 19 839 060
- JP-U- 04 060 758
- JP-U- 63 009 059
- JP-U- 63 137 060

## Description

### Background Art

The present invention relates to technologies of a buckle used in a seat-belt apparatus mounted on a vehicle, such as an automobile, for restraining an occupant with a seat belt, the buckle being to be retained by a tongue supported to the seat belt; a seat-belt reminder apparatus that gives a warn when the tongue is not retained to the buckle even if the occupant sits in a vehicle seat; and the seat-belt apparatus having the seat-belt reminder apparatus.

A seat-belt apparatus, which has been conventionally attached to a vehicle seat of an automobile, blocks an occupant from jumping out of the seat by restraining the occupant with a seat belt at an emergency such as a case where a great deceleration is applied to a vehicle during a collision.

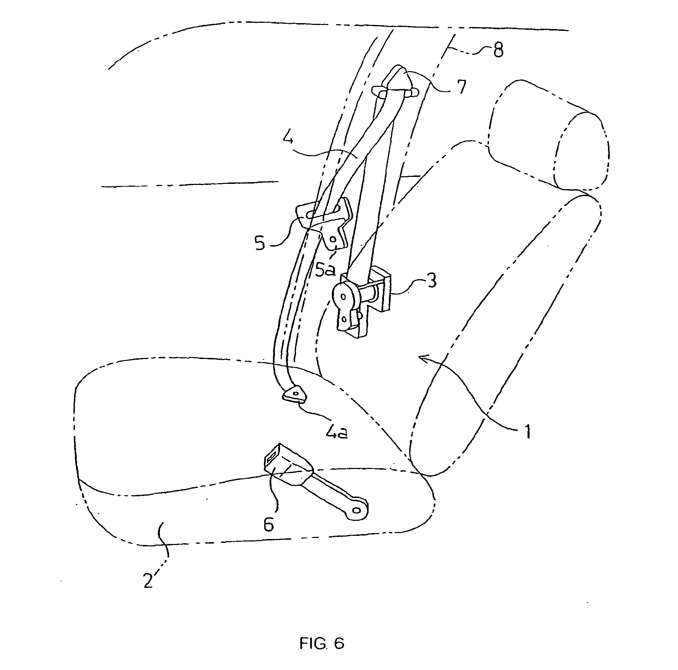

Such a conventional seat-belt apparatus has conventionally included a three-point seat-belt apparatus shown in Fig. 6. In the drawing, reference numeral 1 denotes a seat-belt apparatus attached to a vehicle seat 2; numeral 3 a seat belt retractor fixed to a vehicle body in the vicinity of the vehicle seat 2 such that the seat belt retractor 3 retracts a seat belt 4 possibly to be withdrawn under ordinary circumstances while disabling the seat belt 4 to be withdrawn at an emergency; numeral 5 a tongue slidably supported to the seat belt 4 and having a retainer piece 5a; numeral 6 a buckle fixed to the vehicle seat 2 or the vehicle body to be inserted and retained by the retainer piece 5a of the tongue 5; and numeral 7 a belt guide attached to an upper part of a vehicle side, such as a center pillar 8, for guiding the seat belt 4 withdrawn from the seat belt retractor 3. A belt anchor 4a at the end of the seat belt 4 withdrawn from the seat belt retractor 3 is fixed to the vehicle seat 2 or the vehicle body.

In the seat-belt apparatus 1 configured in such a manner, upon mounting the seat belt 4 on an occupant, the occupant sits in the vehicle seat 2, withdraws the seat belt 4 from the seat belt retractor 3, and inserts and retains the retainer piece 5a of the tongue 5 into the buckle 6, and then, when separating a hand of the occupant from the tongue 5, the excessively withdrawn seat belt 4 is retracted by the seat belt retractor 3 so as to cancel the slackness of the seat belt 4 so that the seat belt 4 is mounted on the occupant.

In such a seat-belt apparatus 1, even when an occupant sits in the vehicle seat 2, the seat-belt apparatus 1 cannot exert the function described above if the seat belt 4 is not mounted on the occupant. Then, a seat belt warning apparatus (corresponding to a seat belt reminder apparatus according to the present invention) has been proposed that gives a warning against the non-wearing the seat belt when the seat belt 4 is not mounted on the occupant even if the occupant sits in the vehicle seat 2 (see Japanese Unexamined Patent Application Publications No. H11-70855, No. 2004-26003, and No. 2004-237827, for example).

The seat belt warning apparatus described in Japanese Unexamined Patent Application Publication No. H11-70855 includes a buckle switch provided in a buckle for detecting the retaining of a tongue in the buckle, a sitting detection switch provided in a vehicle seat for detecting the sitting of an occupant in the vehicle seat, and an indicator lamp. Thereby, when the buckle switch does not detect that the tongue is retained to the buckle even if the sitting detection switch detects the sitting of the occupant when the occupant sits in the vehicle seat, the indicator lamp is turned on so as to warn the occupant of the non-wearing the seat belt.

The seat belt warning apparatus described in Japanese Unexamined Patent Application Publication No. 2004-26003 also includes a buckle switch for detecting the retaining of a tongue in a buckle, a door open/close switch for detecting the open/close of a door, a sitting determination device for determining the sitting of an occupant in a vehicle seat on the basis of the output signal of the door open/close switch, a switch member actuating on the basis of the output signal of the sitting determination device, and an indicator lamp provided in a meter display on a vehicle instrument panel. Thereby, when the buckle switch does not detect that the tongue is retained to the buckle even if the sitting detection switch detects the sitting of the occupant when the occupant sits in the vehicle seat, the indicator lamp is turned on so as to warn the occupant of the non-wearing the seat belt.

Furthermore, the seat belt warning apparatus described in Japanese Unexamined Patent Application Publication No. 2004-237827 includes a buckle switch provided in a buckle
for detecting the retaining of a tongue in the buckle, a sitting detection switch provided in a vehicle seat for detecting the sitting of an occupant in the vehicle seat,
and an illuminating lamp provided at a member disposed on the side of the vehicle seat. Thereby, when the buckle switch does not detect that the tongue is retained to the buckle even if the sitting detection switch detects the sitting of the occupant when the occupant sits in the vehicle seat, the illuminating lamp is turned on so as to warn the occupant of the non-wearing the seat belt.

On the other hand, the conventional seat-belt apparatus 1 includes an occupant detection device for detecting the sitting of an occupant in a vehicle seat and a buckle switch actuating when a tongue is inserted and retained into a buckle, in which a seat-belt apparatus has been proposed in that individual detected signals from the occupant detection device and the buckle switch are used for a seat-belt mounting display on a vehicle display and the control for the seat-belt apparatus 1 such as tension control of a seat belt (see Japanese Unexamined Patent Application Publication No. 2000-219102, for example).

In the seat-belt apparatus described in Japanese Unexamined Patent Application Publication No. 2000-219102, both the occupant detection device and the buckle switch are provided in the buckle, so that the occupant detection device can detect the occupant sitting in the vehicle seat without being influenced by the sitting position and posture of the occupant.

Furthermore, in the conventional seat-belt apparatus 1, there is proposed a seat-belt apparatus having a pair of LED lamps disposed on both sides of a tongue insertion hole of a buckle, respectively (see Japanese Unexamined Utility Model Registration Application Publication No. H05-15813, for example). In the seat-belt apparatus described in Japanese Unexamined Utility Model Registration Application Publication No. H05-15813, an occupant is easily visible the tongue insertion hole of the buckle even in the night by turning on the LED lamps.

Since the seat-belt reminder apparatus is for simply prompting the mounting the seat belt when the occupant sitting in the vehicle seat does not wear the seat belt, the seat-belt reminder apparatus is not necessarily provided in the vehicle, so that it is strongly demanded to be simply attached if necessary as well as to be inexpensive. It is necessary to electrically connect the buckle switch, the sitting detection switch, and the indicator lamp together with wiring especially when controlling the seat-belt reminder apparatus; the electrical wiring must also be as simple and inexpensive as possible.

However, in any of the seat-belt reminder apparatuses described in Japanese Unexamined Patent Application Publications No. H11-70855, No. 2004-26003, and No. 2004-237827, the buckle switch is provided in the buckle; whereas, in the seat-belt reminder apparatuses described in Japanese Unexamined Patent Application Publications No. H11-70855 and No. 2004-237827, the sitting detection switch is provided in the vehicle seat separated from the buckle, and in the seat-belt reminder apparatus described in Japanese Unexamined Patent Application Publication No. 2004-26003, the sitting detection switch is composed of the door open/close switch, the sitting determination device, and the switch member that are provided at positions separated from the buckle.

Furthermore, in the seat-belt reminder apparatuses described in Japanese Unexamined Patent Application Publications No. H11-70855 and No. 2004-26003, the indicator lamp is provided at a position separated from the buckle, such as the meter display on the vehicle instrument panel, and in the seat-belt reminder apparatus described in Japanese Unexamined Patent Application Publication No. 2004-237827, the illuminating lamp is provided in the vehicle seat separated from the buckle.

When the buckle switch, the sitting detection switch, and the indicator lamp are provided in different positions in such a manner, the configuration of the seat-belt reminder apparatus becomes complicated and the number of parts is increased, so that it is difficult to simply attach the seat-belt reminder apparatus to the vehicle as well as the apparatus becomes expensive.

On the other hand, in the buckle described in Japanese Unexamined Patent Application Publication No. 2000-219102, although the buckle is provided with the buckle switch and the sitting detection switch, the sitting detection switch is used for only displaying the mounting of the seat belt and for controlling the seat-belt apparatus 1, and no reminder function is considered. Also, in the buckle described in Japanese Unexamined Utility Model Registration Application Publication No. H05-15813, although the buckle is provided with the LED lamp, the LED lamp is used for only facilitating to visualize the tongue insertion hole of the buckle and no reminder function is considered in the same way.

DE 1 9839 060 A1 discloses a buckile to be retained by a tongue supported to a seat-belt. The buckle comprises a buckle switch. Further on, an occupant detection device exists in the backrest of the vehicle seat and, a seat-belt terminder apparatus to be actuated when the tongue is not retained is provided.

### Disclosure of Invention

It is an object of the present invention to provide a buckle having a seat-belt reminder function, a seat-belt reminder apparatus capable of being simply attached as well as of being manufactured at inexpensive cost by configuring it as simply as possible, and a seat-belt apparatus having the buckle and the seat-belt reminder apparatus.

In order to achieve this object, in a buckle to be retained by a tongue supported to a seat belt, the buckle according to the present invention includes a buckle switch to be actuated when the tongue is retained; an occupant detection device for detecting an occupant sitting in a vehicle seat; and a seat-belt reminder apparatus to be actuated when the tongue is not retained even if the occupant sits in the vehicle seat to give a warn.

In a seat-belt reminder apparatus that gives a warn when a tongue supported to a seat belt is not retained to a buckle to be retained by the tongue even if an occupant sits in a vehicle seat, the seat-belt reminder apparatus according to the present invention includes the buckle according to Claim 1; and a theoretical circuit device that outputs a signal to the seat-belt reminder apparatus for actuating the seat-belt reminder apparatus when the tongue is not retained to the buckle even if the occupant sits in the vehicle seat, based on a signal outputted from the buckle switch and a signal outputted from the occupant detection device.

Furthermore, a seat-belt apparatus according to the present invention at least includes a seat belt for restraining an occupant; a tongue supported to the seat belt; a buckle to be retained by the tongue; and a seat-belt reminder apparatus that gives a warn when the tongue is not retained to the buckle even if the occupant sits in a vehicle seat, in which in the seat-belt apparatus in that the seat belt is mounted on the occupant by the retaining of the tongue to the buckle, the seat-belt reminder apparatus is the seat-belt reminder apparatus according to Claim 2.

In the buckle according to the present invention configured in such a manner, the buckle is provided with the seat-belt reminder apparatus, so that the buckle can have a reminder function. The buckle also includes the buckle switch, the seat-belt reminder apparatus, and the occupant detection device, which are integrally provided, so that the buckle, the buckle switch, the seat-belt reminder apparatus, and the occupant detection device can be unitized. Thereby, the buckle switch, the seat-belt reminder apparatus, and the occupant detection device can be simply configured at low cost, reducing the number of parts.

Also, in the seat-belt reminder apparatus according to the present invention, the buckle, the buckle switch, the seat-belt reminder apparatus, and the occupant detection device are unitized, so that the electrical wiring connecting the buckle switch, the seat-belt reminder apparatus, and the occupant detection device to the theoretical circuit unit of the seat-belt reminder apparatus can be simply and inexpensively configured, while the seat-belt reminder apparatus can be simply and inexpensively installed in response to a user's demand, etc. Furthermore, even when an occupant sits in the vehicle seat, unless the tongue is retained to the buckle, the buckle having the reminder function gives a warn to more effectively prompt the occupant to wear the seat belt.

Furthermore, in the seat-belt apparatus according to the present invention, the buckle, the buckle switch, the seat-belt reminder apparatus, and the occupant detection device are unitized as well as the electrical wiring of the seat-belt reminder apparatus is simply and inexpensively configured, so that even when the seat-belt reminder apparatus is provided, the configuration of the seat-belt apparatus can be simplified while by efficiently prompting an occupant to wear the seat belt, the occupant restraint function of the seat-belt apparatus can be effectively exhibited.

### Brief Description of Drawings

Fig. 1 is a perspective view schematically showing an embodiment of a buckle according to the present invention.
Fig. 2 is a block diagram of a control system of the buckle according to the embodiment shown in Fig. 1.
Fig. 3 is a control circuit diagram of the buckle according to the embodiment shown in Fig. 1 on one control circuit condition.
Fig. 4 is a control circuit diagram of the buckle according to the embodiment shown in Fig. 1 on another control circuit condition.
Fig. 5 is a control circuit diagram of the buckle according to the embodiment shown in Fig. 1 on still another control circuit condition.
Fig. 6 is a perspective view schematically showing a conventional three-point seat-belt apparatus.

### Best Mode for Carrying Out the Invention

The best mode for carrying out the present invention will be described below with reference to the drawings.

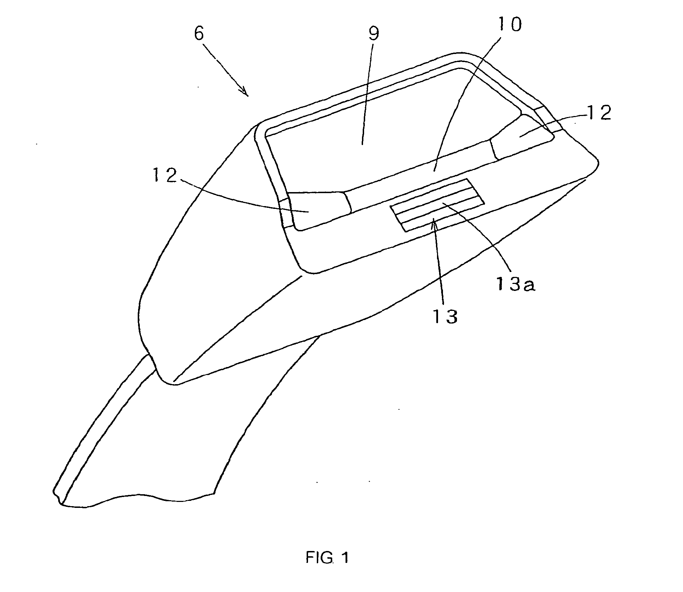

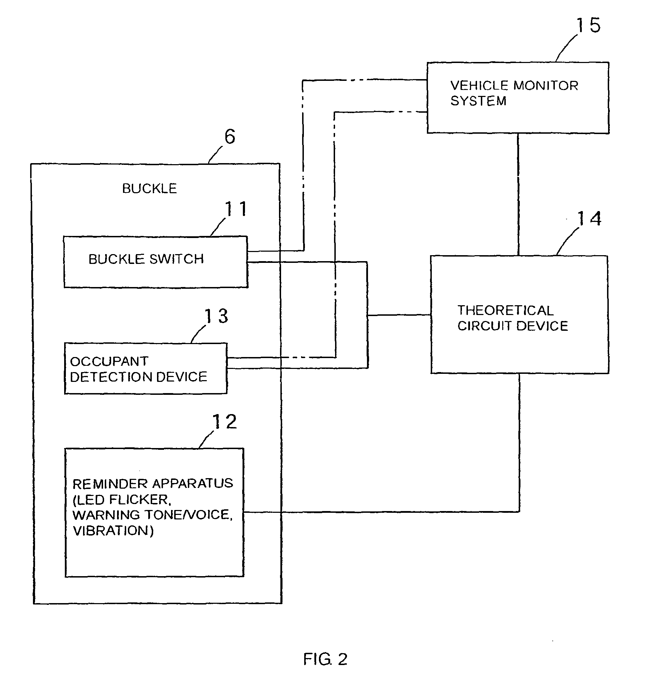

Fig. 1 is a perspective view schematically showing an embodiment of a buckle according to the present invention; and Fig. 2 is a block diagram of a control system of the buckle according to the embodiment. Like reference symbols designate like components common to the conventional example shown in Fig. 6, so that the detailed description is omitted.

The buckle 6 according to the embodiment is used for the same seat-belt apparatus 1 as that in the above-mentioned conventional example shown in Fig. 6. A buckle according to the present invention is not limited to this, so that any seat-belt apparatus other than that in the conventional example shown in Fig. 6 may be incorporated in the invention as long as the seat belt 4 withdrawn from the seat belt retractor 3 is mounted on an occupant by retaining the tongue 5 in the buckle 6.

As shown in Figs. 1 and 2, the buckle 6 according to the embodiment, in the same way as in the conventional buckle, includes a cancel button 9 for cancelling the retainment of the inserted and retained tongue 5, a tongue insertion hole 10 to be inserted and retained by the retainer piece 5a of the tongue 5, and a buckle switch 11 outputting a tongue retainment signal by being actuated when the tongue 5 is retained to the buckle 6. The buckle 6 according to the embodiment is also provided with a seat-belt reminder apparatus 12 and an occupant detection device 13 disposed therein.

The seat-belt reminder apparatus 12 is an apparatus for giving a warn for prompting an occupant to wear the seat belt 4 when the seat belt 4 is not mounted even if the occupant sits in the vehicle seat 2 for travelling in a vehicle. The seat-belt reminder apparatus 12 includes at least one of a vibrating device giving a warn by vibrating the buckle 6 itself like a miniature vibrating device used for a mobile phone, a buzzer giving a warning tone, a miniature voice generating device giving a warning voice, and a miniature light emitting device such as an LED lamp giving a warn by flickering the lamp.

As shown in Fig. 1, a seat-belt reminder apparatus according to the embodiment includes the seat-belt reminder apparatus 12. A pair of the seat-belt reminder apparatuses 12 are adjacently provided on the both sides of the tongue insertion hole 10 in the longitudinal direction. The seat-belt reminder apparatus 12 according to the present invention is not limited to this, so that one or more arbitrary numbers of the seat-belt reminder apparatuses 12 may be provided, while as for the installation site, the seat-belt reminder apparatus 12 may be provided at any place in the buckle 6 other than the positions adjacent to the both sides of the tongue insertion hole 10 as long as the seat-belt reminder apparatus 12 can be provided.

The occupant detection device 13, including an occupant detection sensor 13a, is to output an occupant sitting detection signal by detecting an occupant sitting in the vehicle seat 2. The occupant detection sensor 13a is adjacently provided to the tongue insertion hole 10. Since the tongue insertion hole 10 is used for inserting the retainer piece 5a of the tongue 5, the tongue insertion hole 10 is slanted upward to the direction of the vehicle seat,
so that the occupant detection sensor 13a, which is adjacently provided to the tongue insertion hole 10, can effectively detect an occupant sitting in the vehicle seat.

The occupant detection sensor 13a is a proximity switch including a reflection near infrared ray sensor, for example. The near infrared ray sensor has advantages of compact, low-electric powered, inexpensive, as well as of being assembled in the buckle 6 without changing the size of the buckle 6. The occupant detection sensor 13a is not limited to the near infrared ray sensor, so that a far infrared ray sensor may also be used. The far infrared ray sensor is also compact and inexpensive as well as can form a proximity sensor that detects only a living thing such as a human body sitting in the vehicle seat. Furthermore, proximity sensors employing a magnetic field, an electric field, and radio waves may also be used for the occupant detection sensor 13a.

The occupant detection device 13 according to the present invention is not limited to the configuration described above, so that any detection device may be used as long as the device can detect an occupant sitting in the vehicle seat 2 and it can be provided in the buckle 6. As for the installation site of the occupant detection device 13, it may also be provided at any place in the buckle 6 other than the place adjacent to the tongue insertion hole 10, as long as at the place, the seat-belt reminder apparatus 12 can be arranged as well as an occupant sitting in the vehicle seat 2 can be detected.

In such a manner, the buckle 6 according to the embodiment includes the buckle switch 11, the seat-belt reminder apparatus 12, and the occupant detection device 13 that are integrally provided, and the buckle 6, the buckle switch 11, the seat-belt reminder apparatus 12, and the occupant detection device 13 are unitized. Therefore, the buckle 6 according to the embodiment has the above-mentioned reminder function.

As shown in Fig. 2, the buckle switch 11 and the occupant detection device 13 are connected to a theoretical circuit unit 14 that is a theoretical circuit device according to the present invention, so that a tongue retainment signal outputted from the buckle switch 11 and an occupant sitting detection signal outputted from the occupant detection device 13 are to be supplied to the theoretical circuit unit 14.

Furthermore, the theoretical circuit unit 14 is connected to the seat-belt reminder apparatus 12. Then, a tongue retainment signal from the buckle switch 11 and an occupant sitting detection signal from the occupant detection device 13 are supplied to the theoretical circuit unit 14. On the basis of the supply presence of a tongue retainment signal from the buckle switch 11 and the supply presence of an occupant sitting detection signal from the occupant detection device 13, the theoretical circuit unit 14 outputs a warn signal to the seat-belt reminder apparatus 12 when the tongue retainment signal is not supplied from the buckle switch 11 even if the occupant sitting detection signal is supplied.

On the basis of the warning signal, the seat-belt reminder apparatus 12 vibrates the buckle 6 when the seat-belt reminder apparatus 12 is a vibrating device; produces a warning tone when the seat-belt reminder apparatus 12 is a buzzer; generates a warning voice when the seat-belt reminder apparatus 12 is a voice generating device; and further flickers a light-emitting lamp when the seat-belt reminder apparatus 12 is a light-emitting device so as to prompt an occupant to wear the seat belt 4. Hence, the occupant sitting in the vehicle seat 2 is to wear the seat belt 4 based on the warning by the seat-belt reminder apparatus 12.

Furthermore, both the buckle switch 11 and the occupant detection device 13 are connected to a vehicle monitor system 15, and output a display signal of the retainment to the buckle 6 and a display signal of the occupant sitting in the vehicle seat 2, respectively. The vehicle monitor system 15 individually displays the tongue retainment to the buckle 6 and the occupant sitting in the vehicle seat 2 based on these signals.

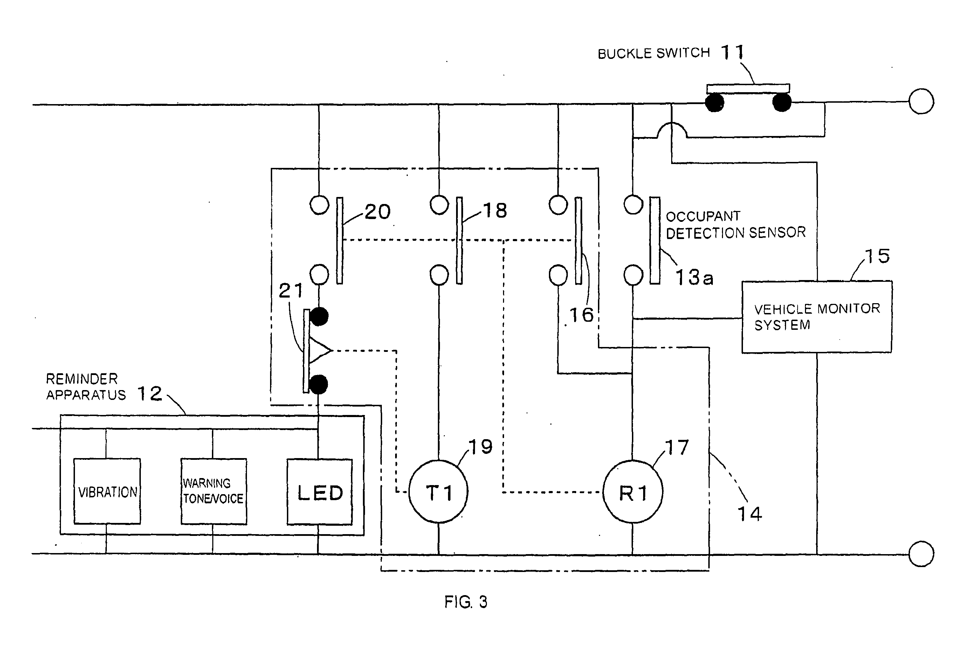

Figs. 3 to 5 are control circuit drawings of the buckle according to the embodiment.

As shown in Fig. 3, the control circuit of the buckle 6 according to the embodiment includes the buckle switch 11 that closes when the tongue 5 is not retained to the buckle and opens when the tongue 5 is retained to the buckle; the occupant detection sensor 13a of the occupant detection device 13 connected to the buckle switch 11 in series to open when the occupant sitting in the vehicle seat 2 is not detected and to close when the occupant sitting in the vehicle seat 2 is detected; a relay switch 16 connected to the occupant detection sensor 13a in parallel; a relay (R1) 17 connected to the occupant detection sensor 13a and the relay switch 16 in series; a timer switch 18 connected to the occupant detection sensor 13a and the relay switch 16 in parallel; a timer (T1) 19 connected to the timer switch 18 in series; a reminder actuating switch 20 connected to the occupant detection sensor 13a, the relay switch 16, and the timer switch 18 in parallel; a reminder actuating timer switch 21 connected to the reminder actuating switch 20 in series to close under ordinary circumstances and to open by receiving an output signal from the timer (T1) 19; and the seat-belt reminder apparatus 12 connected to the reminder actuating timer switch 21 in series.

The timer (T1) 19 outputs a signal for opening the reminder actuating timer switch 21 to the reminder actuating timer switch 21 when the measured elapsed time reaches the setting time t minutes established in advance (about one to 10 minutes, for example) by measuring the elapsed time from the time at which the timer switch 18 is closed. Also, the relay switch 16, the timer switch 18, and the reminder actuating switch 20 are synchronously opened/closed.

In this case, the relay switch 16, the relay (R7) 17, the timer switch 18, the timer (T1) 19, the reminder actuating switch 20, and the reminder actuating timer switch 21 constitute the theoretical circuit unit 14. Then, the buckle switch 11, the seat-belt reminder apparatus 12, the occupant detection sensor 13a, and the theoretical circuit unit 14 constitute a seat-belt reminder apparatus.

Circuit conditions of the control circuits of the buckle shown in Figs. 3 to 5 are shown in Table 1.

**Table 1**

| CIRCUIT CONDITION | OCCUPANT DETECTION PRESENCE | BUCKLE SWITCH ACTUATION PRESENCE | REMINDER APPARATUS ACTUATION PRESENCE |
|---|---|---|---|
| Fig. 3 | ABSENT | ABSENT | ABSENT |
| Fig. 4 | PRESENT | PRESENT | ABSENT |
| Fig. 5 | PRESENT | ABSENT | PRESENT |

As shown in Table 1, in the circuit condition shown in Fig. 3, the occupant detection is absent as well as the actuation of the buckle switch 11 is not present, so that the circuit is under the condition without the presence of the actuation of the seat-belt reminder apparatus 12. Specifically, as shown in Fig. 3, the occupant sitting in the vehicle seat 2 is not detected so as to open the occupant detection sensor 13a; and the tongue 5 is not retained to the buckle 6 to close the buckle switch 11, so that the seat-belt reminder apparatus 12 is not actuated. Namely, this circuit is under the condition of non-travelling of a vehicle.

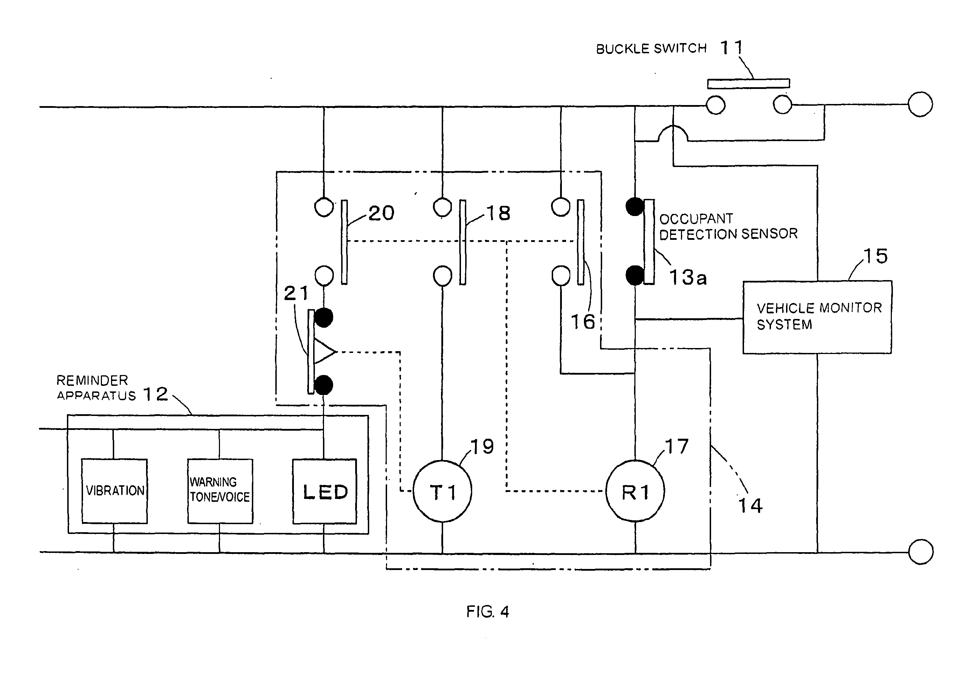

Also, as shown in Table 1, in the circuit condition shown in Fig. 4, the occupant detection is present as well as the actuation of the buckle switch 11 is present, so that the circuit is under the condition without the presence of the actuation of the seat-belt reminder apparatus 12. Specifically, as shown in Fig. 4, the occupant sitting in the vehicle seat 2 is detected so as to close the occupant detection sensor 13a; however, the tongue 5 is retained to the buckle 6 to open the buckle switch 11, so that the seat-belt reminder apparatus 12 is not actuated. Namely, this circuit is under the condition that the occupant sitting in the vehicle seat 2 regularly wears the seat belt 4.

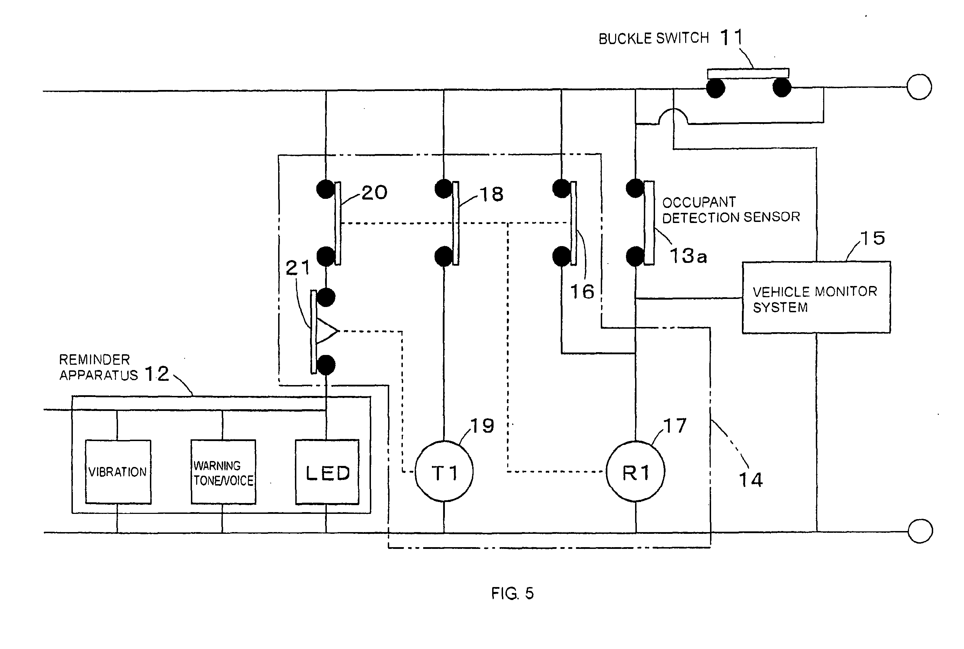

Furthermore, as shown in Table 1, in the circuit condition shown in Fig. 5, the occupant detection is present and the actuation of the buckle switch 11 is absent, so that the circuit is under the condition with the presence of the actuation of the seat-belt reminder apparatus 12. Specifically, as shown in Fig. 5, the occupant sitting in the vehicle seat 2 is detected so as to close the occupant detection sensor 13a; and the tongue 5 is not retained to the buckle 6 to close the buckle switch 11, so that the seat-belt reminder apparatus 12 is actuated. In further specifically describing the actuation of the seat-belt reminder apparatus 12, the occupant detection sensor 13a is closed, so that the relay (R7) 17 is actuated to close the relay switch 16. By the closure of the relay switch 16, the relay (R7) 17 is self-maintained being actuated.

Also, the timer switch 18 and the reminder actuating switch 20 are closed simultaneously with the closing operation of the relay switch 16. Then, the seat-belt reminder apparatus 12 is actuated so as to give a warn as mentioned above for prompting the occupant sitting in the vehicle seat 2 to wear the seat belt 4. Simultaneously, the timer (T1) 19 is actuated by the closure of the timer switch 18 to start measuring the time.

In a state that a warn is being given by the seat-belt reminder apparatus 12, the occupant detection device 13 may occasionally fail to detect an occupant to open the occupant detection sensor 13a by the slight moving of the occupant who has no will to separate from the vehicle seat 2 but to take something from a console box, for example. However, since the relay (R7) 17 is self-maintained being actuated at this time, the warning by the seat-belt reminder apparatus 12 is continued.

When the occupant sitting in the vehicle seat 2 wears the seat belt 4 by inserting and retaining the tongue 5 into the buckle 6 after the seat-belt reminder apparatus 12 is actuated to give a warn as mentioned above, the buckle switch 11 is opened. Then, the relay (R7) 17 is not actuated to open the relay switch 16. Since the timer switch 18 and the reminder actuating switch 20 are also opened simultaneously with the opening of the relay switch 16, the seat-belt reminder apparatus 12 is not actuated so as to stop the warning by the seat-belt reminder apparatus 12. By the opening of the timer switch 18, the time measurement by the timer (T1) 19 is stopped and the measuring time is reset.

After the warn is given by the seat-belt reminder apparatus 12, when the setting time, t minutes, established as mentioned above is elapsed, the timer (T1) 19 outputs an opening signal to the reminder actuating timer switch 21, so that the reminder actuating timer switch 21 is opened. Thereby, the warn by the seat-belt reminder apparatus 12 is stopped, thereby preventing the seat-belt reminder apparatus 12 from giving the warn for an unnecessary long time.
In addition, instead of the theoretical circuit unit 14, an electronic control device, such as a CPU, may also be used.

In the buckle 6 according to the embodiment, the buckle 6 is provided with the seat-belt reminder apparatus 12, so that the buckle 6 can have a reminder function. Since the buckle switch 11, the seat-belt reminder apparatus 12, and the occupant detection device 13 are integrally provided in the buckle 6, the buckle 6, the buckle switch 11, the seat-belt reminder apparatus 12, and the occupant detection device 13 can be unitized. Thereby, the buckle switch 11, the seat-belt reminder apparatus 12, and the occupant detection device 13 can be simply and inexpensively configured, reducing the number of parts.

Also, in the seat-belt reminder apparatus according to the embodiment, since the buckle 6, the buckle switch 11, the seat-belt reminder apparatus 12, and the occupant detection device 13 are unitized, the electrical wiring connecting the buckle switch 11, the seat-belt reminder apparatus 12, and the occupant detection device 13 to the theoretical circuit unit 14 of the seat-belt reminder apparatus can be simply and inexpensively configured, while the seat-belt reminder apparatus can be simply and inexpensively installed in response to a user's demand. Furthermore, even when an occupant sits in the vehicle seat 2, unless the retainer piece 5a of the tongue 5 is inserted and retained to the buckle 6, the buckle 6 having the reminder function gives a warn to more effectively prompt the occupant to wear the seat belt 4.

Furthermore, in the seat-belt apparatus 1 according to the embodiment, the buckle 6, the buckle switch 11, the seat-belt reminder apparatus 12, and the occupant detection device 13 are unitized as well as the electrical wiring of the seat-belt reminder apparatus is simply and inexpensively configured, so that even when the seat-belt reminder apparatus is provided, the configuration of the seat-belt apparatus 1 can be simplified while by efficiently prompting an occupant to wear the seat belt, the occupant restraint function of the seat-belt apparatus 1 can be effectively exhibited.

In such a manner, by incorporating the seat belt retractor 3 according to the embodiment in the seat-belt apparatus 1, an occupant can be restrained with the seat belt 4 for a long period of time efficiently in accordance with vehicle travelling situations and operating conditions of the seat-belt apparatus 19.

### Industrial Applicability

The buckle according to the present invention can be preferably used for a buckle device having a buckle to be retained by a tongue supported to a seat belt.
The seat-belt reminder apparatus and the seat-belt apparatus according to the present invention can also be preferably used for a seat-belt apparatus mounted on a vehicle, such as an automobile, for restraining an occupant with the seat belt by retaining the tongue supported to the seat belt to the buckle.

## Claims

1. A buckle (6) for retaining a tongue (5) supported to a seat belt (4), the buckle (6) comprising:
a buckle switch to be actuated when the tongue (5) is retained;
an occupant detection device (13) for detecting an occupant sitting in a vehicle seat (2); and
a seat-belt reminder apparatus (12) to be actuated when the tongue (5) is not retained even if the occupant sits in the vehicle seat (2) to give a warn,
whereby the buckle switch, the occupant detection device (13) and the seat-belt reminder apparatus (12) are integrally provided in the buckle (6).

2. A buckle (6) according to claim 1, wherein the seat-belt reminder apparatus (12) comprises a theoretical circuit device that outputs a signal to the seat-belt reminder apparatus (12) for actuating the seat-belt reminder apparatus (12), based on a signal outputted from the buckle switch and a signal outputted from the occupant detection device (13).

3. A seat-belt apparatus comprising:
a seat-belt (4) for restraining an occupant;
a tongue (5) supported to the seat-belt (4); and
a buckle (6) according to claim 1 or claim 2.

## Patentansprüche

1. Schloss (6) zum Halten einer von einem Sitzgurt getragenen Zunge (5), das Schloss (6) umfassend:
einen Schlossschalter, welcher zu betätigen ist, wenn die Zunge (5) gehalten wird;
eine Insassenerfassungsanordnung (13) zum Erfassen eines in einem Fahrzeugsitz sitzenden Insassen; und
eine Sitzgurterinnerungsvorrichtung (12), welche zu betätigen ist, um ein Warnsignal abzugeben, wenn die Zunge (5) nicht gehalten wird, selbst wenn der Insasse in dem Fahrzeugsitz (2) sitzt,
wobei der Schlossschalter, die Insassenerfassungsanordnung (13) und die Sitzgurterinnerungsvorrichtung (12) in das Schloss (6) integriert vorgesehen sind.

2. Schloss (6) nach Anspruch 1, wobei die Sitzgurterinnerungsvorrichtung (12) eine theoretische Schaltungsanordnung umfasst, welche ein Signal an die Sitzgurterinnerungsvorrichtung (12) basierend auf einem von dem Schlossschalter ausgegebnen Signal und einem von der Insassenerfassungsanordnung (13) ausgegebenen Signal ausgibt, um die Sitzgurterinnerungsvorrichtung (12) zu betätigen.

3. Sitzgurtvorrichtung umfassend:
einen Sitzgurt (4) zum Zurückhalten eines Insassen;
eine von einem Sitzgurt (4) getragene Zunge (5); und
ein Schloss (6) nach Anspruch 1 oder Anspruch 2.

## Revendications

1. Une boucle (6) pour retenir une languette (5) supportée par une ceinture de sécurité (4), la boucle (6) comprenant :
un commutateur de boucle destiné à être actionné lorsque la languette (5) est retenue ;
un dispositif de détection d'occupant (13) pour détecter la présence d'un occupant assis dans un siège de véhicule (2), et
un dispositif de rappel du port de la ceinture de sécurité (12) destiné à être actionné lorsque la languette (5) n'est pas retenue alors que l'occupant est assis dans le siège du véhicule, pour donner un avertissement, dans lequel le commutateur de boucle, le dispositif de détection de la présence d'un occupant (13) et le dispositif de rappel du port de la ceinture de sécurité (12) sont prévus de façon monobloc au sein de la boucle (6).

2. Une boucle (6) selon la revendication 1, dans laquelle le dispositif de rappel du port de la ceinture de sécurité (12) comprend un dispositif formant circuit théorique émettant un signal vers le dispositif de rappel du port de la ceinture de sécurité (12) pour activer le dispositif de rappel du port de la ceinture de sécurité (12), sur la base d'un signal fourni en sortie par le commutateur de boucle ainsi qu'un signal fourni en sortie par le dispositif de détection de la présence d'un occupant (13).

3. Dispositif formant ceinture de sécurité comprenant :
une ceinture de sécurité (4) pour retenir un occupant ;
une languette (5) supportée par la ceinture de sécurité (4) ; et
une boucle (6) selon la revendication 1 ou la revendication 2.
